# EUROPÄISCHE PATENTANMELDUNG

(11) **EP 2 495 640 A1**
(43) Veröffentlichungstag der Anmeldung: **05.09.2012**
(21) Anmeldenummer: 11156481.1
(22) Anmeldetag: 01.03.2011
(51) Int. Cl.: G06F 3/041, G06F 3/044, G06F 3/048

(54) **Eingabeelement zur Bedienung eines Berührungsbildschirms**

(71) Anmelder: printechnologics GmbH, 09112 Chemnitz (DE)
(72) Erfinder: Kreutzer, André, 09648 Mittweida (DE); Weigelt, Karin, 09113 Chemnitz (DE); Förster, Matthias, 01307 Dresden (DE)
(74) Vertreter: Lange, Sven

(57) **Zusammenfassung**

Die Erfindung betrifft ein Eingabeelement zur Bedienung eines Berührungsbildschirms, die ein elektrisch nicht leitfähiges Substrat und eine auf diesem aufgebrachte elektrisch leitfähige Schicht umfasst. Weiterhin betrifft die Erfindung eine Tastatur und die Verwendung der Taste.

## Beschreibung

Die Erfindung betrifft ein Eingabeelement zur Bedienung eines Berührungsbildschirms, welche ein elektrisch nicht leitfähiges Substrat und eine auf diesem aufgebrachte elektrisch leitfähige Schicht umfasst. Die leitfähige Schicht ist dabei in 3 funktionale Bereiche gegliedert, einer Elektrode, einer Leiterbahn und einer Taste wobei die Elektrode mit dem Berührungsbildschirm wirkverbunden ist. Weiterhin betrifft die Erfindung eine Tastatur und die Verwendung des Eingabeelements.

Im Stand der Technik sind zahlreiche elektronische Geräte beschrieben, die einen berührungsempfindlichen Bildschirm (Berührungsbildschirm) aufweisen, der auch als Touch-Screen bezeichnet wird und mit Fingern oder Eingabegeräten bedienbar ist. Touchscreens befinden sich heutzutage beinahe in allen Lebensbereichen. Durch ihre intuitive Bedienung erleichtern sie gerade dem unerfahrenen Benutzer das leichte Bedienen von technischen Geräten in der Alltagswelt und können zur Bedienung eines elektronischen Gerätes verwendet werden. Das heißt, sie finden neben der Anwendung im Alltag auch in der Industrie, in der Touchscreens zum Beispiel zur Steuerung von Maschinen Verwendung oder im Bereich der Spieleindustrie, bei welcher sie für Spielautomaten oder Arcade Games eingesetzt werden. Weitere Beispiele für Berührungsbildschirme umfassen Smartphones, Handys, Displays, Tablet-PCs, Tablet-Notebooks, Touchpad-Geräte, Grafiktabletts, Fernseher, PDAs, MP3-Player, und/oder sonstige Eingabegeräte.

Ein Berührungsbildschirm kann auch Bestandteil von Eingabegeräten sein. Derartige Eingabegeräte werden unter anderem in Smartphones, PDAs, Touchdisplays oder Notebooks eingesetzt.

Allgemein versteht man unter einem Berührungsbildschirm, auch Tastschirm oder Sensorbildschirm genannt, eine auf dem Bildschirm angebrachte berührungssensitive Schicht, welche auf Kontakt des Benutzers mit seinem Finger oder einem je nach verwendeter Technologie geeigneten Zeigegriffel reagiert. Der Berührungsbildschirm ist ein Eingabegerät mit direkter Wirkung, das heißt die Eingabe erfolgt direkt auf dem angezeigten Raum, nicht abseits der Anzeige, wie dies beispielsweise bei Maus oder Tastatur der Fall wäre. Zudem erfolgt die Positionierung beim Touchscreen absolut, das heißt sie ist nicht abhängig von der vorhergehenden Position. Folglich bieten Touchscreens eine äußerst intuitive Bedienung, da der Bildschirm zugleich als Benutzeroberfläche dient und nicht der Umweg über externe Eingabegeräte gewählt werden muss.

Die meisten Berührungsbildschirme können nur bzw. vorzugsweise mit Fingern oder Eingabegeräten bedient werden. Das heißt, auch komplexe Eingaben müssen über den Bildschirm erfolgen. Hierfür werden auf dem Bildschirm Symbole, Schriftzeichen oder Zahlen dargestellt, die durch einen Finger berührt werden müssen, damit eine Eingabe erfolgt. Da jedoch der Platz auf dem Bildschirm begrenzt ist und oftmals ein zu aktivierendes Feld mehrere Zeichen kodiert, kommt es zu Fehleingaben. Generell ist der Nutzer geneigt, längere Texte oder komplexe Eingaben nicht über einen Berührungsbildschirm vorzunehmen.

Im Stand der Technik sind Eingabegeräte, wie beispielsweise Tastaturen beschrieben, die der Bedienung eines elektronischen Gerätes dienen. Eine Tastatur beschreibt ein Eingabegerät, das unter anderem als Bedienelement eine Anzahl von mit Fingern zu drückenden Tasten enthält. Über die Tastatur kann beispielsweise eine Maschine, ein Computer oder eine sonstige Vorrichtung bedient werden. Die im Stand der Technik beschriebenen Tastaturen basieren auf elektronischen, mechanischen oder pneumatischen Tasten, durch die Eingaben präzise weitergeleitet werden können. Eine Tastatur kann weiterhin Bestandteil eines Smartphones oder eines Handys sein. Somit muss die Tastatur neben einer präzisen Eingabe einen strukturellen Aufbau besitzen, der eine Integration in ein Handy oder Smartphone ermöglicht. Im Stand der Technik sind sogenannte Folientastaturen beschrieben, die vor allem dort verwendet werden können, wo Schmutz- und Wasserresistenz bzw. eine leichte Reinigbarkeit gefordert ist oder wo eine kompakte Bauweise oder eine preiswerte Herstellung gewünscht wird. Diese Tastaturen finden einen Einsatz als Tastatur in Computern, Maschinen, Medizingeräten, desinfizierbaren Applikationen oder elektrischen Haushaltsgeräten.

Die Folientastatur ist prinzipiell flexibel aufgebaut, wodurch sie auch unter besonderen Einsatzbedingungen dauerhaft einsatzfähig ist. Die Oberflächen bestehen häufig aus Kunststoffen, die meist thermisch verformt sind und/oder Prägungen aufweisen. Um eine präzise Eingabe zu ermöglichen, verfügen viele Folientastaturen über eine elastische Federungszone, die einen Tastenhub von etwa einem halben Millimeter ermöglicht. Ansonsten weisen diese Tastaturen im Wesentlichen die gleichen ergonomischen Leistungsmerkmale auf, die auch bei mechanischen Standarddrucktasten Einsatz finden.

Ausgehend vom Stand der Technik ist es die Aufgabe der Erfindung ein Eingabeelement bereitzustellen, mit dem ein Berührungsbildschirm bedienbar ist und das nicht die Nachteile oder Mängel des Stands der Technik aufweist.

Gelöst wird die Aufgabe durch die unabhängigen Ansprüche. Vorteilhafte Ausführungsformen ergeben sich aus den abhängigen Ansprüchen.

Es war überraschend, dass ein Eingabeelement zur Bedienung eines Berührungsbildschirms bereitgestellt werden kann, wobei das Eingabeelement ein Substrat und eine elektrisch leitfähige Schicht umfasst und die elektrisch leitfähige Schicht auf dem Substrat vorliegt. Die elektrisch leitfähige Schicht besteht bevorzugt aus drei unterschiedlichen funktionalen Bereichen. Es ist bevorzugt, dass die elektrische Schicht strukturiert ist und aus mindestens einer Taste, mindestens einer Leiterbahn und mindestens einer Elektrode besteht und wenigstens die Elektrode mit dem Berührungsbildschirm wirkverbunden ist. Die Leiterbahnen und/oder Elektroden eines Eingabeelementes können vorteilhafterweise miteinander verbunden sein, so dass Verschaltungen herstellbar sind.

Das Eingabeelement kann weiterhin eine Decklage aufweisen, die die elektrisch leitfähige Schicht und/oder das Substrat bedeckt. Die Decklage ist bevorzugt aus Papier, Kunststoff und/oder Metall gefertigt und kann mit einer Farb- und/oder Lackschicht bedruckt oder beschichtet sein. Die Decklage kann vorteilhafterweise eine Kleberschicht, eine Papierschicht, eine Farbschicht, eine Lackschicht und/oder eine Folie sein. Es ist natürlich auch denkbar Kombinationen der Vorgenannten aufzubringen. Als Substrate der Decklage kommen bevorzugt alle elektrisch nicht leitenden Materialien in Frage, wie beispielsweise Papier, Karton, Holzwerkstoffe, Verbundwerkstoffe, Laminate und/oder Kunststoffe. Das Eingabeelement kann durch die Decklage vor Verschmutzungen aber auch vor äußeren Krafteinwirkungen geschützt werden. So kann das Eingabeelement beispielsweise einfach transportiert und versendet werden.

Der erste Bereich des Eingabeelements ist eine Taste. Sie stellt die Schnittstelle zum Bediener dar und steht während der Verwendung mit diesem in Wechselwirkung. Das heißt, die Taste kann von dem Bediener oder einem Benutzer physisch berührt werden. Die Taste ist bevorzugt außerhalb des Berührungsbildschirms angeordnet.

Der zweite Bereich des Eingabeelements ist eine Elektrode. Sie stellt die Schnittstelle zum Berührungsbildschirm dar und ist vorzugsweise in räumlicher Nähe zu diesem angeordnet. Eine räumliche Nähe bezeichnet im Sinne der Erfindung insbesondere, dass ein direkter Kontakt oder indirekter Kontakt besteht und die Elektrode in funktionaler Wechselwirkung zum Berührungsbildschirm steht. Diese Wechselwirkung kann durch verschiedene physikalische Wirkprinzipien oder Kombinationen derer erreicht werden, z. B. kapazitiv, induktiv, elektromagnetisch oder elektronisch. Die jeweilige Wechselwirkung hängt vom konkret vorliegenden Berührungsbildschirmtyp, d. h. von der Berührungsbildschirm Technologie ab. Die Funktion der Elektrode ist vorzugsweise das Auslösen mindestens eines Berührungsereignisses auf dem Berührungsbildschirm. Ein Berührungsereignis oder auch Touchevent genannt, bezeichnet im Sinne der Erfindung insbesondere ein Auslösen eines Ereignisses auf dem Berührungsbildschirm.

Der dritte Bereich des Eingabeelements ist eine Leiterbahn, welche die beiden anderen Bereiche elektrisch miteinander verbindet.

Damit ist die Taste über die Leiterbahn mit der Elektrode und dem Berührungsbildschirm wirkverbunden und dadurch wird die Verbindung zwischen Bediener und Berührungsbildschirm hergestellt und somit ein vollständiges Eingabeelement realisiert. Durch die Kombination der technischen Merkmale konnte ein Eingabeelement bereitgestellt werden, mit eine einfache und komfortable Bedienung eines Berührungsbildschirms erreicht wird. Es können komplexe Eingabe einfach über die mit dem Bildschirm verbundene Taste durchgeführt werden, wobei die Tasten des Eingabeelementes bevorzugt größer als die Eingabefelder am Berührungsbildschirm ausgestaltet sind, so dass mittels großen Tasten kleine Eingabefelder am Berührungsbildschirm bedient werden können, was die Eingabe wesentlich vereinfacht. Insbesondere für sehbehinderte Personen kann das Eingabeelement vorteilhaft sein. Die Tasten des Eingabeelementes können mit taktilen Elementen beschichtet werden, wodurch Berührungsbildschirme für sehbehinderte Personen nutzbar werden. Weiterhin können Schriftzeichen auf den Tasten des Eingabeelementes vergrößert dargestellt werden, um beispielsweise älteren Menschen das Erkennen der Tasten zu vereinfachen.

Es ist bevorzugt, dass das Substrat der Taste ausgewählt ist aus der Gruppe umfassend Kunststoff, Papier, Karton, Holzwerkstoff, Folie, Verbundwerkstoff, Glas, Keramik, Textilien, Leder oder einer Kombination davon. Das Substrat ist insbesondere ein elektrisch nicht leitender Stoff, der vorzugsweise flexibel ist und ein geringes Gewicht aufweist. Es können lichtdurchlässige oder lichtundurchlässige Substrate verwendet werden.

Auf dem Substrat ist eine elektrisch leitfähige Schicht aufgebracht, wobei die Schicht bevorzugt als Fläche vorliegt. Die Form der Fläche ist beliebig und kann in unterschiedlichen Ausführungen gestaltet sein. So können beispielsweise runde, eckige oder ovale Flächen oder Kombinationen auf dem Substrat vorliegen. Es können auch komplexe geometrische Formen realisiert werden oder mehrere einzelne Flächen miteinander kombiniert sein. Es kann bevorzugt sein, dass auf einem Substrat mehrere elektrisch leitfähige Flächen aufgebracht sind. Vorteilhafterweise können Form, Orientierung, Anzahl, Ausrichtung, Abstand und/oder Position der Flächen variieren.

Die Flächen können eben oder uneben, beispielsweise erhaben; positiv geprägt oder thermogedruckt bzw. vertieft oder negativ geprägt ausgeführt sein, was eine Bedienung oder Betätigung des Eingabeelements erheblich vereinfacht, da beispielsweise einem Finger eine eindeutige Position auf der Taste zugewiesen werden kann. Vorteilhafterweise kann die elektrisch leitfähige Schicht und/oder die Decklage eben oder uneben ausgestaltet sein. Somit ist eine taktile oder haptische Wahrnehmung der Taste möglich. Es kann auch bevorzugt sein, taktile oder haptische Elemente auf die Decklage oder die elektrisch leitfähige Schicht aufzubringen, um eine Wahrnehmung zu verbessern. Es ist ferner möglich die Taste mit zusätzlichen Elementen auszuführen, wie beispielsweise Abstandshalter, Schnappscheiben, taktile Elemente oder anderen aus Tastaturen oder Schaltern bekannten Varianten. Eine Taste ist z.B. ein Bedienelement, welches durch Berührung, bevorzugt Drücken, betätigt wird und danach bevorzugt in die Ausgangslage zurückkehrt. Die Tasten im Sinne der Erfindung können z.B. durch LED so ausgestaltet sein, dass nicht nur an einer Wirkung erkennbar ist, ob sie betätigt wurden, sondern auch durch ein optisches oder akustisches Signal. Schalter sind Bedienelemente, die bevorzugt in der jeweiligen Position verbleiben, so dass man sehr einfach erkennen kann, ob sie betätigt worden sind oder nicht.

Die elektrisch leitfähige Schicht ist bevorzugt eine Metallschicht, eine Metallpartikel enthaltene Schicht, eine elektrisch leitfähige Partikel enthaltene Schicht, elektrisch leitfähige Polymerschicht oder eine Schicht aus wenigstens einer Kombination dieser Schichten. Generell kann jedes Material verwendet werden, das elektrisch leitfähig ist. Des Weiteren können auch metallorganische Materialien, bestehend aus einer Verbindung aus Metall und Kohlenstoff verwendet werden. Metalle bezeichnen im Sinne der Erfindung insbesondere chemische Elemente, die sich im Gegensatz zu den Nichtmetallen im Periodensystem links der diagonalen Trennungslinie beginnend mit dem Element Beryllium (2. Gruppe) bis hin zum Polonium (16. Gruppe) befinden, sowie deren Legierungen und intermetallische Verbindungen (umfassend Laves-Phasen, Heusler-Phasen, Zintl-Phasen, Hume-Rothery-Phasen, NiTi, Co5, Nb3Sn oder Ni3Al) mit charakteristischen metallischen Eigenschaften. Metalle umfassen u. a. Aluminium, Blei, Chrom, Eisen, Gold, Indium, Cobalt, Kupfer, Magnesium, Mangan, Molybdän, Natrium, Nickel, Silber, Titan, Wolfram, Zink oder Zinn. Weiterhin können Metalloxide wie beispielsweise Indiumzinnoxid eingesetzt werden. Dies ist besonders vorteilhaft, weil es zwar elektrisch leitfähig ist, aber auch transparent und deswegen keine Fläche auf dem Berührungsbildschirm optisch abgedeckt wird.

Polymere bezeichnen im Sinne der Erfindung insbesondere eine Substanz, die sich aus einem Kollektiv chemisch einheitlich aufgebauter, sich in der Regel aber hinsichtlich Polymerisationsgrad, Molmasse und Kettenlänge unterscheidender Makromoleküle (Polymermoleküle) zusammensetzt. Die Polymere sind vorzugsweise elektrisch leitfähig. Bei solchen polymereinheitlichen Stoffen sind alle Makromoleküle bevorzugt gleich aufgebaut und unterscheiden sich lediglich durch ihre Kettenlänge (Polymerisationsgrad). Man kann derartige Polymere als Polymerhomologe bezeichnen. Polymere können aus der Gruppe umfassend anorganische Polymere, metallorganische Polymere voll- oder teilaromatischen Polymeren, Homopolymere, Copolymere, Biopolymere, chemisch modifizierte Polymere und/oder synthetische Polymere ausgewählt werden. Besonders bevorzugt sind Polymere ausgewählt aus Paraphenylen, Polyacetylen, Polypyrrol, Polythiophen, Polyanilin (PANI) und PE-DOT.

Elektrisch leitfähige Substanzen sind weiterhin insbesondere Ruß- oder Graphitpartikel. Ruß beschreibt eine Erscheinungsform des Kohlenstoffs, die sich bei unvollständiger Verbrennung bzw. thermischer Spaltung von dampfförmigen Kohlenstoffhaltigen Substanzen bildet. Ruß kann in Pulver-förmiger oder granulierter Form verwendet werden. Es können auch Ruß Präparationen, beispielsweise als flüssige, pastenförmige oder feste Ruß-Lösemittel-Konzentrate, in denen der Ruß gleichmä-βig dispergiert ist, verwendet werden. Je nach Herstellungsweise und Rohstoff kann Ruß neben Kohlenstoff Wasserstoff, Stickstoff oder Sauerstoff enthalten. Ruß weist eine hervorragende Pigment-Eigenschaft, sowie eine Unlöslichkeit in allen Lösungsmitteln, Resistenz gegen die meisten Chemikalien, Lichtechtheit, hohe Farbtiefe u. Farbstärke auf. Graphit bezeichnet im Sinne der Erfindung insbesondere eine stabile Modifikation des Kohlenstoffs. Aufgrund eines schichtartigen Aufbaus ist Graphit ein guter Leiter.

Die elektrisch leitfähige Schicht wird bevorzugt strukturiert auf das Substrat aufgebracht. Strukturiert bezeichnet im Sinne der Erfindung insbesondere, dass die elektrisch leitfähige Schicht das Substrat nicht vollständig, sondern partiell bedeckt. Durch die Verknüpfung der elektrischen Leitfähigkeit mit der strukturierten Aufbringung, ist es überraschenderweise gelungen, eine gezielte Wechselwirkung der Taster mit einem Berührungsbildschirm zu erreichen.

Das Eingabeelement, bevorzugt das elektrisch nicht leitende Substrat, ist bevorzugt an oder auf dem Berührungsbildschirm mit einer form- und/oder stoffschlüssigen Verbindung befestigt, so dass die Elektroden mit dem Berührungsbildschirm in Kontakt oder zumindest räumlicher Annäherung stehen, welche eine Wechselwirkung mit dem Berührungsbildschirm zulässt. Die form- und/oder stoffschlüssige Verbindung mit dem Berührungsbildschirm ist vorzugsweise reversibel ausgeführt. Das heißt, der Zustand vor der Herstellung der Verbindung kann wiederhergestellt werden, ohne dass das Eingabeelement oder der Berührungsbildschirm oder deren Umgebung bleibende Veränderungen erfahren. Es kann auch bevorzugt sein, dass das Substrat nach Klebezettelprinzip (z.B. Post-it-notes) oder sonstigen Haft-Klebestoffen an dem Berührungsbildschirm befestigt wird. Die 3 Bereiche des Eingabeelementes (Tasten, Leiterbahnen und Elektroden) bestehen bevorzugt aus dem gleichen elektrisch leitfähigen Material. Es ist ferner denkbar, dass weitere Elemente zur temporären oder dauerhaften Fixierung des Eingabeelements am Berührungsbildschirm zum Einsatz kommen. Denkbar sind alle Formen von Kleber (elektrisch leitend und elektrisch nicht leitend) oder Leimen, Gummis, Banderolen, Einschubhilfen, Klammern usw. Dies ermöglicht einen guten erfindungsgemäßen Kontakt zwischen Elektrode und Berührungsbildschirm, eine fehlerfreie Bedienung, weil Abrutschen oder Verschieben verhindert wird. Es ist ferner gelungen typische Gerätegehäuse und Schutzhüllen derart zu funktionalisieren, dass das Eingabeelement mit dem Berührungsbildschirm zur einwandfreien Funktionsausübung miteinander verbunden worden ist. Es ist bevorzugt, dass alle technisch relevanten Verfahren zur stoffschlüssigen oder formschlüssigen Fixierung des Eingabeelements genutzt werden können. Vorteilhafterweise können mindestens zwei Eingabeelemente mit einem Berührungsbildschirm wirkverbunden werden.

Da die auf dem Substrat vorliegende elektrisch leitfähige Schicht bevorzugt aus dem gleichen oder einem ähnlichen elektrisch leitfähigen Material bestehen, ist die Anwendung nur eines technologischen Verfahrens nötig, um diese Bereiche gleichzeitig herzustellen. Dadurch ist das Eingabeelement als Massenprodukt leicht und ökonomisch realisierbar.

Es sind ferner alle technologischen Verfahren zur Erzeugung einer strukturierten elektrisch leitfähigen Schicht auf einem elektrisch nichtleitfähigen Substrat denkbar. Dies schließt beispielsweise additive Verfahren wie Druckverfahren, Stempelverfahren, PVD- und CVD- Verfahren, galvanische Verfahren ein, als auch subtraktive Verfahren wie Laserstrukturierung, Bürstverfahren, Fräsverfahren usw. Natürlich sind auch semi-additive Verfahren denkbar wie z.B. Ätzverfahren.

Es war völlig überraschend, dass das Eingabeelement in einer bevorzugten Ausführungsform durch ein Transferverfahren herstellbar ist. Es ist bevorzugt, dass die elektrisch leitfähige Schicht durch ein Transferfolienverfahren, besonders bevorzugt durch ein Kaltfolientransferverfahren auf dem Substrat aufgebracht wird. Dem Fachmann sind derartige Verfahren bekannt. Selbstverständlich können auch alle anderen Verfahren zur strukturierten Aufbringung einer elektrisch leitfähigen Schicht verwendet werden.

Das den Berührungsbildschirm beinhaltende Gerät ist bevorzugt ausgewählt aus der Gruppe umfassend Smartphones, Handys, Displays, Tablet-PCs, Tablet-Notebooks, Tochpad-Geräte, Grafiktabletts, Fernseher, PDAs, MP3-Player, und Eingabegeräte. Ein Berührungsbildschirm kann beispielsweise auch Bestandteil von Eingabegeräten sein. Touchscreens sind auch als Tastschirm oder Sensorbildschirm bekannt. Derartige Eingabegeräte werden unter anderem in Smartphones, PDAs, Touchdisplays oder Notebooks eingesetzt.

Ein im Stand der Technik beschriebener kapazitiver Berührungsbildschirm ist ein mit durchsichtigem Metalloxid (z.B. ITO - Aufgrund der Seltenheit des Elements Indium sind Stoffe wie ITO sehr teuer, deswegen existieren bereits Ansätze ITO durch preiswertere transparente, aber elektrisch leitfähige Materialien zu ersetzen,) beschichtetes Glassubstrat oder Kunststoff. Durch eine an den Ecken der Beschichtung angelegte Spannung wird ein konstantes, gleichmäßiges elektrisches Feld erzeugt und es entsteht ein geringer Ladungstransport, der im Entladezyklus in Form eines Stromes an den Ecken messbar ist. Die resultierenden Ströme aus den Ecken stehen im direkten Verhältnis zu der Touchposition und werden von einem Controller entsprechend verarbeitet. Eine weitere Realisierung eines kapazitiven Berührungsbildschirms nutzt zwei Ebenen aus leitfähigen Streifen, die orthogonal zueinander angeordnet sind. Eine Ebene dient als Sensor, die andere übernimmt die Aufgabe des Treibers. Befindet sich ein Finger am Kreuzungspunkt beider Streifen, so ändert sich die Kapazität des Kondensators und es kommt ein größeres Signal am Empfängerstreifen an.

Es war völlig überraschend, dass das Eingabeelement für eine Vielzahl unterschiedlicher Berührungsbildschirme verwendet werden kann. Versuche haben gezeigt, dass insbesondere kapazitive Berührungsbildschirme besonders gut geeignet sind. Hierbei wird bevorzugt mindestens ein Eingabeelement mit dem Berührungsbildschirm verbunden, wobei das Substrat auf dem, nahe dem oder nicht auf dem, den Berührungsbildschirm umfassenden Gerät angebracht ist.

Bevorzugt ist, wenn das Substrat wenigstens bereichsweise nicht auf dem Gerät oder dem Bildschirm aufliegt. Die Befestigung des Substrats auf dem Berührungsbildschirm kann bevorzugt mittels einer reversiblen stoffschlüssigen Verbindung erfolgen. Hierdurch ist eine schnelle Befestigung und Wiederentfernung des Substrats möglich. Im Sinne der Erfindung bezeichnen stoffschlüssige Verbindungen insbesondere Verbindungen, bei denen die Verbindungspartner durch atomare oder molekulare Kräfte zusammengehalten werden, und umfassen z. B. Kleben oder Klebestreifen. Vorteilhafterweise ist der Bereich des Substrates, welcher mit dem Berührungsbildschirm verbunden ist als haftend ausgeführt, wodurch eine optimale Befestigung mit dem Berührungsbildschirm herstellbar ist.

Es können auch vorteilhafterweise mehrere, mindestens zwei Eingabeelemente zu einer Tastatur kombiniert sein, wobei mindestens ein Eingabeelement mit einem Berührungsbildschirm wirkverbunden ist. Die Eingabeelemente können auch derart angeordnet sein, dass sich die Eingabeelemente auf mindestens 2 Substraten befinden, welche zumindest bereichsweise überlappend angeordnet sind und eine mehrlagige Tastatur realisiert ist. Bereichsweise überlappend bezeichnet im Sinne der Erfindung insbesondere, das mindestens ein Teil eines Eingabeelementes (z. B. Taste, elektrisch leitfähige Schicht, Leiterbahn, Elektrode oder Substrat) mit mindestens einem Teil eines weiteren Eingabeelementes überlappt. Hierdurch kann eine komplexe mehrlagige Tastatur bereitgestellt werden, bei der komplexe Leiterbahnzüge so realisiert werden können. Außerdem können so etwaige Kurzschlüsse zwischen elektrischen Schichten vermieden werden. Es kann bevorzugt sein, die Substrate mittels stoffschlüssigen oder formschlüssigen Verbindungen zu verbinden, wobei die Substrate über derartige Verbindungen auch direkt an dem Berührungsbildschirm anbringbar sind.

Vorteilhafterweise entspricht der Aufbau der Eingabeelemente einer Anordnung von Tasten auf der einen Seite, einer Menge von Leiterbahnen und einer Anordnung von Elektroden auf der anderen Seite, wobei die Elektroden besonders bevorzugt als solche Flächen ausgeführt sind, welche vom Berührungsbildschirm bevorzugt als Fingereingabe erkannt werden. In einem besonders bevorzugten Fall entspricht die Anordnung von Tasten den Tasten einer Tastatur, und die Anordnung von Elektroden einer Anordnung von Touchflächen, welche bevorzugt eine virtuelle Tastatur auf einem Touchscreen bedienbar macht. In einer weiteren Ausführungsform können in Kombination mit Softwareentwicklung frei konfigurierbare Touchflächen bzw. Bereiche auf dem Berührungsbildschirm realisiert werden, die eine bestimmte Aktion auslösen.

Sobald ein Benutzer die auf dem Substrat aufgebrachte elektrisch leitende Schicht im Bereich der Taste mit einem Finger berührt bzw. in Annäherung kommt, wird eine elektrische Kapazität des Benutzers von der elektrisch leitenden Taste über die Leiterbahn oder -bahnen an die Elektroden und somit an den Berührungsbildschirm geleitet. Die so projizierte Berührung des Benutzers auf dem Berührungsbildschirm kann vorteilhafterweise Aktionen aufrufen oder Eingaben ausführen. Wirkverbunden bezeichnet im Sinne der Erfindung insbesondere, dass das Eingabeelement mit dem Berührungsbildschirm derart verbunden oder verknüpft ist, dass von einem Bediener der Taste über die Leiterbahn und/oder die Elektrode ein Ereignis oder ein Effekt auf dem Berührungsbildschirm ausgelöst wird. Beispiele für wirkverbundene Elemente sind beispielsweise die Glühbirne und der Lichtschalter, die über eine Wirkung oder Funktion miteinander verbunden sind. Wirkverbunden meint im einfachsten Sinne insbesondere, dass etwas miteinander mechanisch zumindest zeitweise verbunden ist. Weiterhin kann es - z.B. elektronisch - so verbunden sein, dass Energie und/oder Informationen übertragen werden (beispielsweise, ohne dass eine mechanische Verbindung vorliegt); d.h. zwei Elemente sind so (miteinander) angeordnet oder verknüpft, dass der gewünschte Effekt realisiert wird. Die Taste wird über die Leiterbahn und anschließend die Elektrode mit dem Berührungsbildschirm in Kontakt gebracht. Im Sinne der Erfindung bedeutet in Kontakt bringen, dass insbesondere zwischen der Elektrode und dem Berührungsbildschirm bevorzugt kein Freiraum besteht. Das heißt, die Elektrode ist bevorzugt mit dem Berührungsbildschirm in Berührungskontakt. Es kann jedoch auch bevorzugt sein, dass zwischen der Elektrode und dem Berührungsbildschirm kein direkter Kontakt besteht, sondern nur eine Annäherung vorliegt, welche ausreicht, um ein Ereignis oder eine Aktion auszulösen. Dies ist insbesondere der Fall, wenn Zwischenlagen und/oder Substrate den direkten Kontakt zwischen Elektrode und Berührungsbildschirm verhindern. Dies ist abhängig von dem Aufbau des Eingabeelements an sich, sowie dessen Fixierung am Berührungsbildschirm.

Durch die Wechselwirkung zwischen Elektrode und Berührungsbildschirm kann bevorzugt ein Ereignis auf dem den Berührungsbildschirm tragenden Gerät ausgelöst werden. Das Ereignis löst wiederum Aktionen aus, wie beispielsweise die Aktivierung und/oder Beenden einer Anwendung, das Verändern von numerischen Werten und/oder Texten, das Manipulieren von Grafiken, das Verändern von Datenbeständen oder das Erlangen von Zugriff auf informationstechnische Dienste ohne darauf beschränkt zu sein.

Vorteilhafterweise können mehrere Eingabeelemente in Kombination, insbesondere nebeneinander und/oder übereinander und/oder zeitlich nacheinander, verwertet werden, wobei jede Taste vorzugsweise über mindestens eine Leiterbahn mit mindestens einer Elektrode verbunden ist, welche wiederum mit dem Berührungsbildschirm in bevorzugten Kontakt stehen.

Überraschend war bei der Erprobung der Erfindung, dass die Nutzbarkeit von bestehenden Touchscreens (z.B. für Mobiltelefone oder Tabletcomputer) deutlich verbessert wird. Das Eingabefeld auf einem zu kleinem Berührungsbildschirm kann so beliebig vergrößert, sowie im Layout und den Vorlieben des Benutzers angepasst werden. Darüber hinaus können die Tasten des Eingabeelements beliebig positioniert werden und sind nicht auf eine Nähe zum Berührungsbildschirm angewiesen. Ferner kann Werbung oder weiterführende Information auf den Eingabeelementen an- oder aufgebracht sein. Dies ergibt zusätzliche Werbe- und Marketingfläche und natürlich ein bislang einzigartiges Forum dafür.

Die Erfindung betrifft auch die Verwendung mindestens eines Eingabeelements zur Bedienung eines Berührungsbildschirms. Es sind vielfache Verwendungen des Eingabeelementes bevorzugt. Hierzu gehören beispielsweise die Anwendungen im Werbe- und Marketingbereich, wobei das Eingabeelement als Broschüre oder Flyer eingesetzt werden kann. Besonders vorteilhaft ist die Verwendung in direktem Zusammenhang mit Virtual Items oder aber im Downloadbereich für Musik, Videos, Texte, Daten oder E-Books oder aber für Bonusmarken oder entsprechende Programme.

Es ist weiterhin bevorzugt, dass mindestens eine Taste mindestens einem Datensatz in einem Datenverarbeitungssystem zugeordnet ist und der Datensatz konstant bleibt. In einer weiteren Ausführungsform ist mindestens eine Taste mehreren Datensätzen zugeordnet. In einer bevorzugten Ausführungsform wird mindestens eine Taste einem Datensatz oder mehreren Datensätzen in einem Datenverarbeitungssystem zugeordnet und sich der Datensatz verändert bzw. die Datensätze verändern. Dies kann beispielsweise durch Verwendung der Taste und/oder durch Zeit passieren. Vorteilhafterweise kann mindestens eine Taste derart verwendet werden, dass sie in Verbindung mit einem Berührungsbildschirm über die Leiterbahn einer Aktion eines Datenverarbeitungssystems zugeordnet werden kann oder diese auslöst. Diese Aktion trifft insbesondere auf nicht-vernetzte Datenverarbeitungssysteme und besonders bevorzugt auf vernetzten Datenverarbeitungssystemen zu.

Die Erfindung wird nunmehr anhand von Figuren beispielhaft beschrieben, ohne jedoch auf diese beschränkt zu sein; es zeigt:
- Fig. 1 A-C: Beispiel einer Spielanwendung
- Fig. 2 A-C: Beispiel einer Tastaturanwendung
- Fig. 3 A-B: Weitere Spielanwendung
- Fig. 4: Ausführungsbeispiele der Elektroden
- Fig. 5 A-C: Verwendung der Tastatur zur PIN Eingabe
- Fig. 6 A-C: Tastatur mit wenigen bzw. doppelt belegten Tasten
- Fig. 7 A-C: Touchscreenoberfläche mit 2 Touchflächen, welche als Eingabepunkte fungieren
- Fig. 8 A-C: Ausführung der Tastatur als Multilayer
- Fig. 9 A-C: Multilayer Tastatur
- Fig. 10 A-C: Projizierte dynamischer Eingabebefehl
- Fig. 11 A-C: Weiteres Beispiel einer dynamischen Eingabe
- Fig. 12 A-C: Verbindungsmöglichkeiten

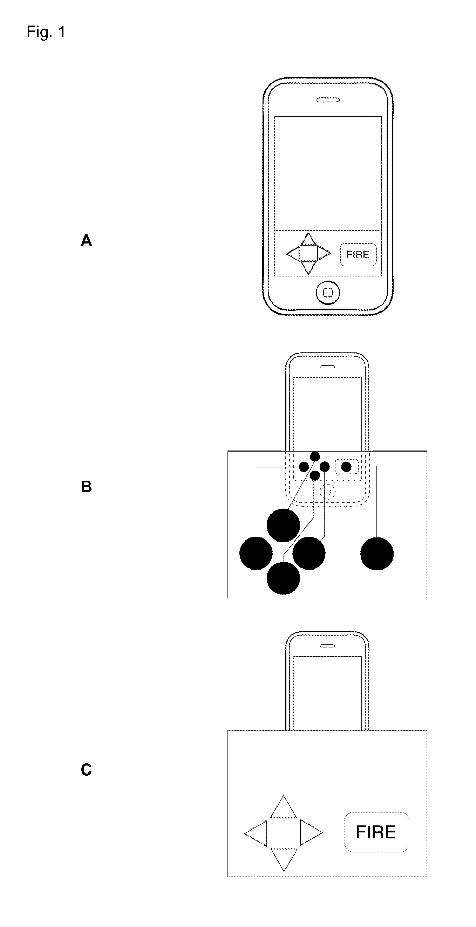

Fig. 1 A-C zeigt ein Beispiel einer Spielanwendung. Die Tastatur kann auch derart ausgestaltet sein, dass sich durch die Wirkverbindung Bereiche auf dem Berührungsbildschirm betätigen lassen, die für eine Spielanwendung gedacht sind. Hierbei besteht ein Kontakt zwischen der Tastatur und einem Joystick bzw. einem Cursorfeld auf dem Berührungsbildschirm, durch welche ein Spiel gesteuert werden kann. Zum Beispiel können 4 Richtungen plus eine Aktionstaste aktivierbar sein.

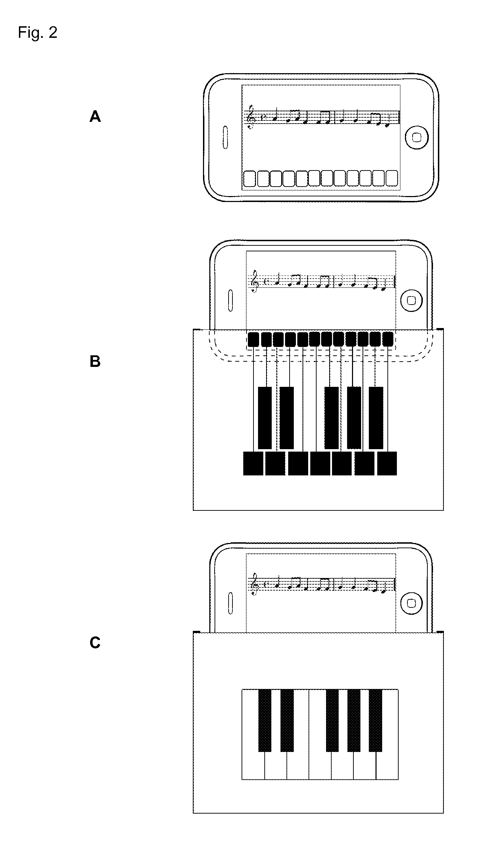

Fig. 2 A-C zeigt eine bevorzugte Anwendung der Tastatur in Form einer Tastaturanwendung in Form einer Klaviatur. Die Tastatur ist derart ausgestaltet, dass über die Leiterbahnen Klaviertasten auf einem Berührungsbildschirm aktiviert bzw. betätigt werden können.

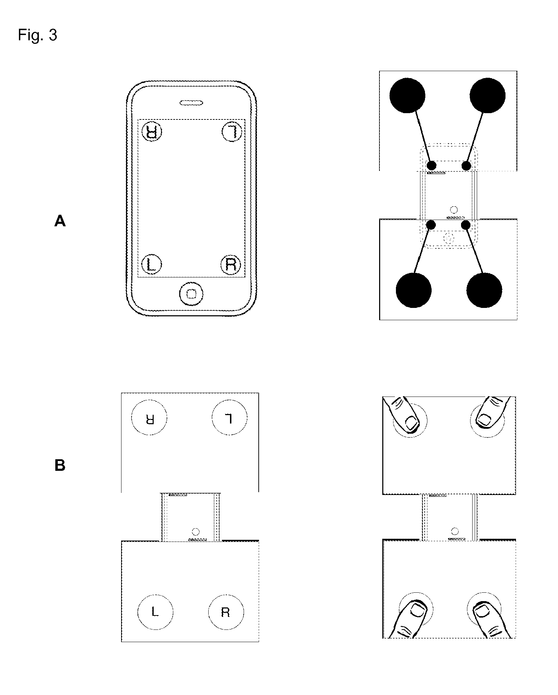

Fig. 3 A-B zeigt eine weitere Spielanwendung. Es können zwei Tastaturen auf einen Berührungsbildschirm aufgelegt oder an diesem befestigt werden, so dass 2 Personen beispielweise von gegenüberliegenden Seiten ein Spiel spielen können. Hierbei können von je einem Spieler beispielsweise zwei Tasten betätigt werden, wobei Single- und Multitouch möglich sind.

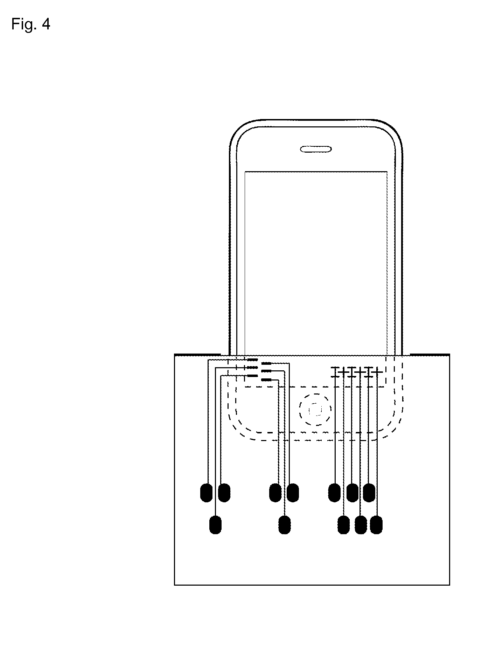

Fig. 4 stellt weitere beispielhafte Ausführungen der Elektroden dar. Hierdurch kann Fläche eingespart werden und macht kann ggf. einen größeren Bereich des Berührungsbildschirms frei lassen.

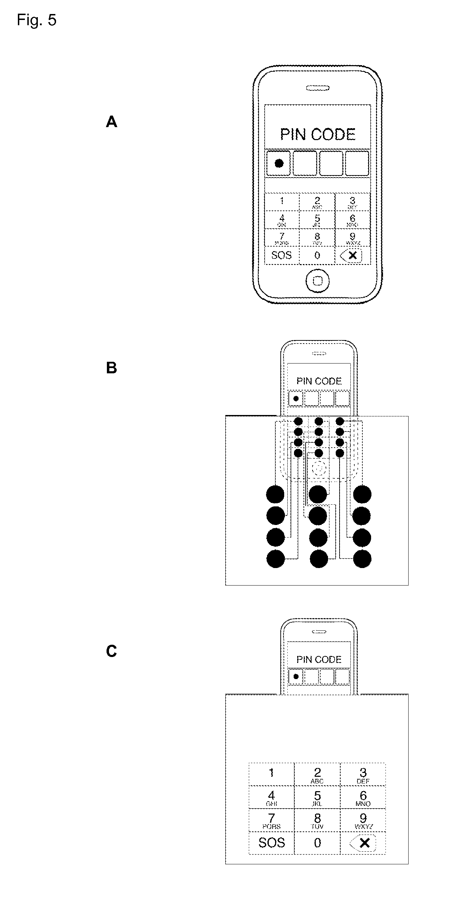

Fig. 5 A-C zeigt eine bevorzugte Verwendung der Tastatur zur PIN Eingabe. Die Tastatur kann beispielsweise über einen Klebstreifen mit dem Berührungsbildschirm verbunden werden. Hierbei bedient ein Benutzer die elektrisch leitfähigen Tasten auf dem Substrat, welche über Leiterbahnen und Elektroden mit dem Berührungsbildschirm wirkverbunden sind. So kann die Tastatur beispielsweise auch zur Eingabe eines PINs über einen Berührungsbildschirm verwendet werden.

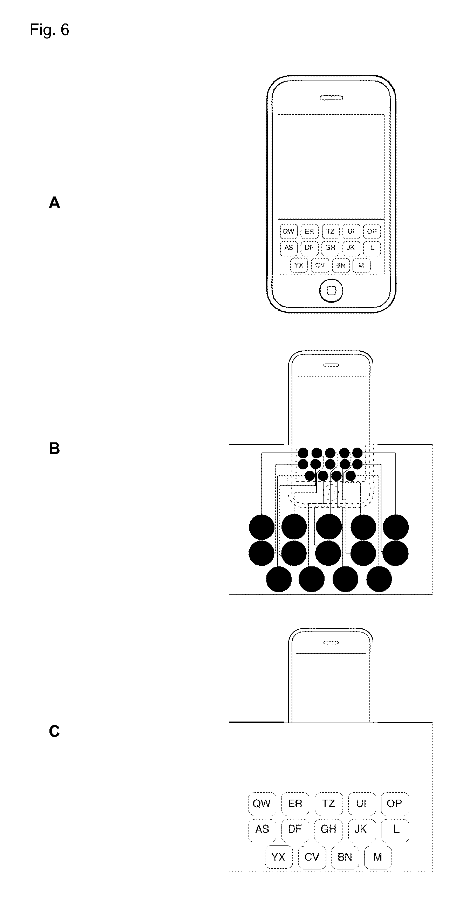

Fig. 6 A-C zeigt eine Tastatur mit z.T. doppelt belegten Tasten. Eine Tastatur kann auch mit mehreren und/oder wenigen Tasten versehen sein. Hierbei kann die Betätigung einer mehrfach belegten Taste eine Eingabe gemäß des ersten Buchstaben auf dem Berührungsbildschirm auslösen. Ein Eingabeprogramm (Software) im Hintergrund sucht gemäß der Eingabe aus einem Wörterbuch die wahrscheinlichsten Wörter (z.B. auch T9 Eingabehilfe). Hierdurch kann eine kleine Tastatur mit voller Funktionalität realisiert werden.

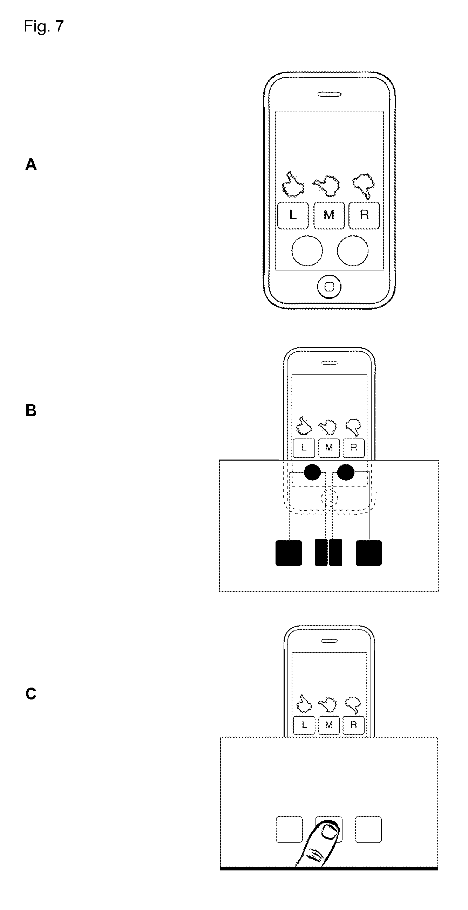

Fig. 7 A-C zeigen eine Touchscreenoberfläche mit 2 Touchflächen, welche als Eingabepunkte fungieren. Fig. 1 A zeigt die Touchscreenoberfläche auf einem Berührungsbildschirm mit 2 Touchflächen, welche als Eingabepunkte fungieren. Fig. 1B stellt mehrere Eingabeelemente als Tastatur dar, mit 2 über den 2 Eingabepunkten angebrachten Elektroden. Dadurch ist die Tastatur über die Elektroden mit dem Berührungsbildschirm wirkverbunden, wobei die Elektroden, die mit dem Bildschirm verbunden sind, als runde Fläche ausgeführt sind. Vorteilhafterweise entspricht die Größe der Elektrodenfläche einem Bereich auf dem Bildschirm, der eine Aktion oder ein Ereignis auslösen kann. Vorteilhafterweise können die Tasten auch derart ausgeführt sein (siehe mittlere Taste), dass durch eine Berührung oder Annäherung eines Bedieners der mittleren Taste ein Multitouch ausgelöst wird (mind. 2 Punkte gleichzeitig), während die beiden anderen Tasten bzw. Tastaturpunkte (links und rechts) nur Singletouch auslösen.

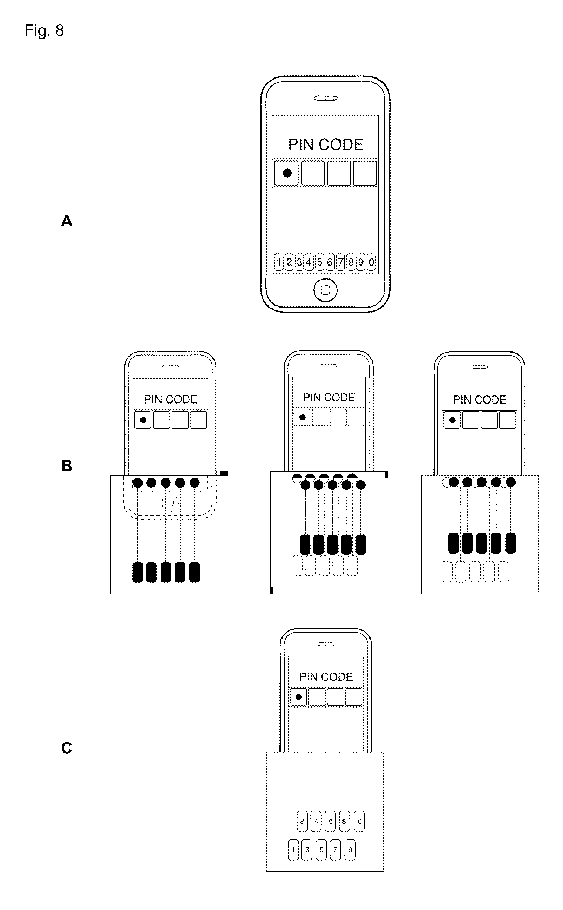

Fig. 8 A-C zeigt die Ausführung der Tastatur als Multilayer. Die leitfähige Schicht mit ihren 3 bevorzugten Bereichen ist auf 2 Substratebenen verteilt. Das ermöglicht eine Überlappung der Bereiche, da diese durch eine nichtleitfähige Schicht voneinander getrennt sind, wodurch es nicht zu einem Kurzschluss kommt. Der Vorteil hierbei ist, dass eine hohe Packungsdichte auf dem Berührungsbildschirm realisiert werden kann und auch sehr komplexe und verzweigte Tastaturen möglich sind.

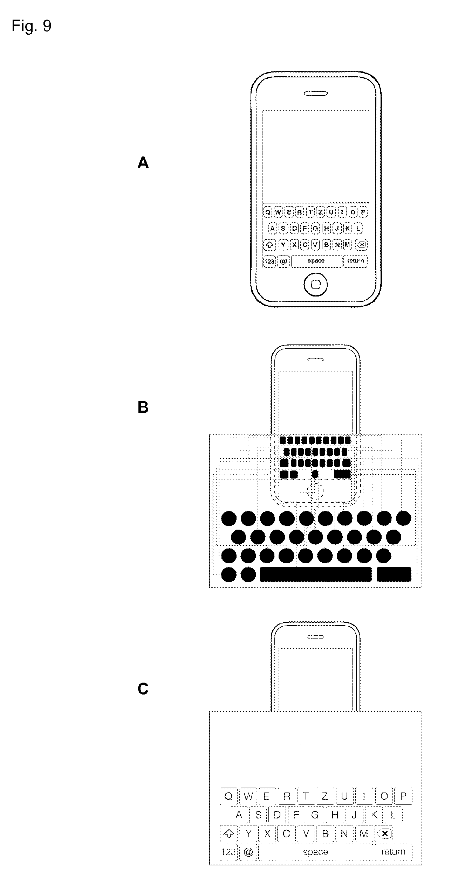

Fig. 9 A-C zeigt die vereinfachte Darstellung eines kompletten Tastaturlayouts als Multilayer Tastatur. Um komplexe Tastaturen bereitzustellen, können die elektrisch leitfähigen Flächen auf unterschiedlichen Substratschichten aufgebracht sein (zur Vereinfachung sind alle elektrisch leitfähigen Bereiche in den Vordergrund gestellt), wobei diese vorzugsweise durch nicht leitfähige Schichten getrennt sind. Die jeweiligen elektrisch leitfähigen Tasten sind über Leiterbahnen mit zu aktivierenden Bereichen, den Elektroden, auf dem Berührungsbildschirm verbunden. Es können so komplexe Tastaturen bereitgestellt werden, die zahlreiche Zeichen aktivieren können.

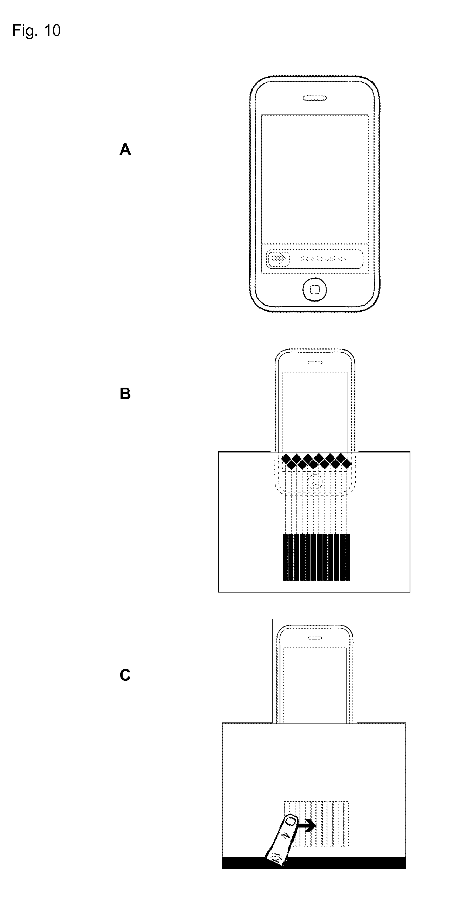

Fig. 10 A-C zeigt eine Projektion eines dynamischen Eingabebefehls. Es ist vorteilhafterweise auch möglich, mittels der Tastatur eine dynamische Bewegung oder Geste zu simulieren. Hierbei sind mehrere Tasten hintereinander angeordnet, die von einem Benutzer in einer fließenden Bewegung betätigt werden. Es kann so ein dynamischer Eingabebefehl durchgeführt werden, wie z. B. die Verschiebung eines Balkens von einer Richtung in eine andere.

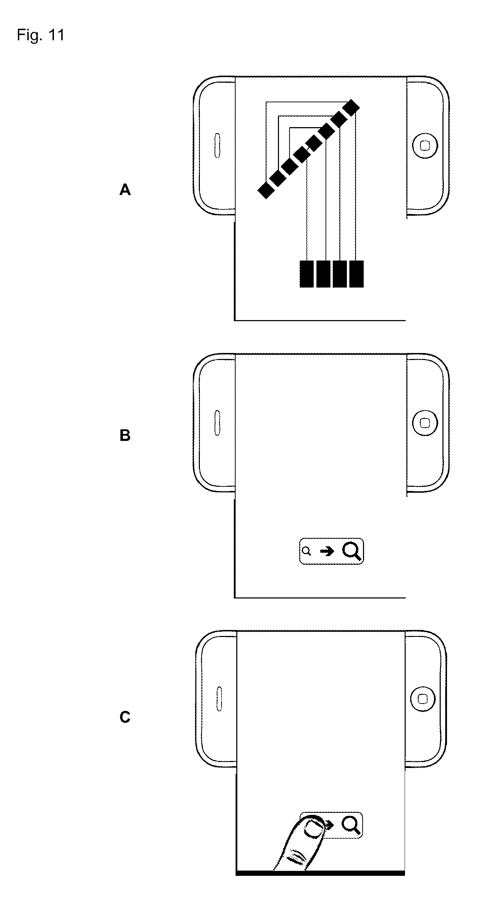

Fig. 11 A-C stellt eine dynamische Eingabe über eine Tastatur dar. Mithilfe der Tastatur kann auch eine dynamische Eingabe erfolgen. Es besteht auch die Möglichkeit, einen Zweifingerzoom durchzuführen, bei dem mehrere elektrisch leitfähige Schichten oder Flächen durch eine einfache Bedienung mit einem Finger, welcher von links nach rechts über den Zoombutton erfolgt, ausgeführt wird. Weiterhin ist gezeigt, dass eine Verschaltung mehrerer elektrisch leitfähiger Elektroden auf dem Substrat möglich ist und hierdurch kurze Leitungswege erreicht werden. Im konkreten Beispiel führt nur eine Leiterbahn von jeweils einer Taste zu einer Elektrode von welcher wiederum einer weitere Leiterbahn zu einer weiteren Elektrode führt. Dadurch sind mehrere Elektroden gleichzeitig ansteuerbar, wobei eine Bewegung mit einem Finger auf der Tastatur in eine Richtung erfolgt und hierdurch ein Zoom erreicht wird. Dadurch ist es möglich, mit einer eindimensionalen Bewegung eine zweidimensionale Bewegung auf dem Berührungsbildschirm auszuführen. Außerdem können auch komplexere Gesten vereinfacht werden.

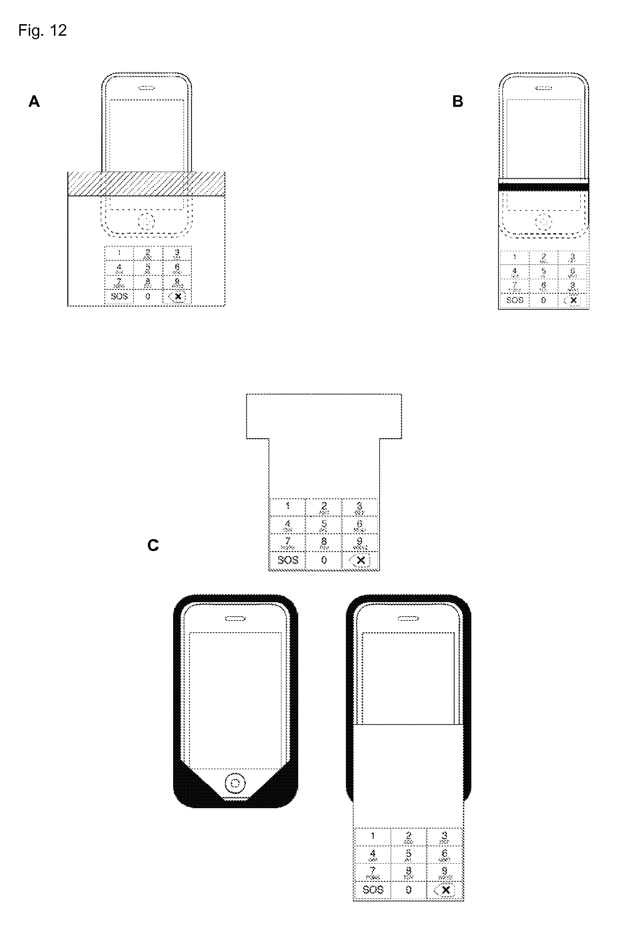

Fig. 12 A-C zeigt verschiedene Verbindungsmöglichkeiten zur Anbringung des Eingabeelementes an einem Berührungsbildschirm. Die Figuren A-C illustrieren lediglich exemplarisch, wie das Eingabeelement an dem Berührungsbildschirm angebracht werden kann, wobei auch die zuvor dargestellten Eingabeelemente ähnlich oder identisch mit dem Berührungsbildschirm verbunden sind. Das Eingabeelement (z. B. das Substrat) kann beispielsweise mittels stoffschlüssiger oder formschlüssiger Verbindungen angebracht werden. Fig. 12 A und B zeigen beispielsweise, wie eine Verbindung mittels eines Haftvermittlers (z. B. Klebstoff) oder nach einem Klebezettelprinzip hergestellt wird. Die Verbindung ist bevorzugt reversibel und kann einfach und schnell, ohne das Verbleiben von Rückstoffen oder einer Beschädigung des Eingabeelementes oder des Berührungsbildschirm, nach Benutzung entfernt werden. Es können weiterhin Gummibänder zur Herstellung einer Verbindung genutzt werden. Das Eingabeelement kann ebenfalls mittels einer Hülle mit dem Berührungsbildschirm verbunden werden (Fig. 12 C). Hierbei ist das Eingabeelement vorzugsweise derart ausgestaltet, dass es in oder an der Hülle des den Berührungsbildschirm aufweisenden Gerätes befestigbar ist. Um die Verbindung zu verbessern, können Falzungen auf dem Eingabeelement vorgesehen sein, die eine Knickung des Elementes an vorgesehenen Stellen ermöglicht.

## Patentansprüche

1. Eingabeelement zur Bedienung eines Berührungsbildschirms, wobei das Eingabeelement ein elektrisch nichtleitfähiges Substrat und eine elektrisch leitfähige Schicht umfasst,
**dadurch gekennzeichnet, dass**
die elektrisch leitfähige Schicht auf dem Substrat vorliegt und die elektrisch leitfähige Schicht mit dem Berührungsbildschirm wirkverbunden ist.

2. Eingabeelement nach Anspruch 1,
**dadurch gekennzeichnet, dass**
die elektrische Schicht strukturiert ist und aus mindestens einer Taste, mindestens einer Leiterbahn und mindestens einer Elektrode besteht und wenigstens die Elektrode mit dem Berührungsbildschirm wirkverbunden ist.

3. Eingabeelement nach Anspruch 1 oder 2,
**dadurch gekennzeichnet, dass**
das Substrat ausgewählt ist aus der Gruppe umfassend Kunststoff, Papier, Karton, Holzwerkstoff, Folie, Verbundwerkstoff, Glas, Keramik, Textilien, Leder oder einer Kombination davon.

4. Eingabeelement nach einem oder mehreren der vorherigen Ansprüche,
**dadurch gekennzeichnet, dass**
die elektrisch leitfähige Schicht ausgewählt ist aus der Gruppe umfassend eine Metallschicht, eine Metallpartikel enthaltene Schicht, eine elektrisch leitfähige Partikel enthaltene Schicht, elektrisch leitfähige Polymerschicht, eine elektrisch leitfähige Oxidschicht, eine Legierung oder eine Schicht aus wenigstens einer Kombination dieser Schichten.

5. Eingabeelement nach einem oder mehreren der vorherigen Ansprüche,
**dadurch gekennzeichnet, dass**
Elektroden und/oder Leiterbahnen untereinander verbunden sind.

6. Eingabeelement nach einem oder mehreren der vorherigen Ansprüche,
**dadurch gekennzeichnet, dass**
das den Berührungsbildschirm beinhaltende Gerät ausgewählt ist aus der Gruppe umfassend Smartphones, Handys, Displays, Tablet-PCs, Tablet-Notebooks, Tochpad-Geräte, Grafiktabletts, Fernseher, PDAs, MP3-Player, und Eingabegeräte.

7. Eingabeelement nach einem oder mehreren der vorherigen Ansprüche,
**dadurch gekennzeichnet, dass**
das Eingabeelement mit einer form- und/oder stoffschlüssigen Verbindung mit dem Berührungsbildschirm verbunden ist.

8. Eingabeelement nach Anspruch 8,
**dadurch gekennzeichnet, dass**
die form- und/oder stoffschlüssige Verbindung mit dem Berührungsbildschirm reversibel ausgeführt ist.

9. Eingabeelement nach einem oder mehreren der vorherigen Ansprüche,
**dadurch gekennzeichnet, dass**
mindestens zwei Eingabeelemente mit einem Berührungsbildschirm wirkverbunden sind.

10. Eingabeelement nach einem oder mehreren der vorherigen Ansprüche,
**dadurch gekennzeichnet, dass**
das Eingabeelement eine Decklage aufweist.

11. Eingabeelement nach einem oder mehreren der vorherigen Ansprüche,
**dadurch gekennzeichnet, dass**
das Eingabeelement durch ein Transferfolienverfahren hergestellt ist.

12. Eingabeelement nach einem oder mehreren der vorherigen Ansprüche,
**dadurch gekennzeichnet, dass**
die elektrisch leitfähige Schicht und/oder die Decklage eben oder uneben ausgestaltet ist.

13. Tastatur umfassend mindestens zwei Eingabeelemente nach den Ansprüchen 1 bis 12,
**dadurch gekennzeichnet, dass**
mindestens eine Taste über mindestens eine Leiterbahn und mindestens eine Elektrode mit einem Berührungsbildschirm wirkverbunden ist.

14. Tastatur nach Anspruch 13,
**dadurch gekennzeichnet, dass**
sich die Eingabeelemente auf mindestens 2 Substraten befinden, welche zumindest bereichsweise überlappend angeordnet sind und eine mehrlagige Tastatur realisiert ist.

15. Verwendung mindestens eines Eingabeelements nach den Ansprüchen 1 bis 12 zur Bedienung eines Berührungsbildschirms.

16. Verwendung nach Anspruch 15, wobei das Eingabeelement ein Ereignis auf dem, den Berührungsbildschirm enthaltenen Gerät auslöst.

17. Verwendung nach Anspruch 15 oder 16, wobei mindestens eine Taste mindestens einem Datensatz in einem Datenverarbeitungssystem zugeordnet ist und der Datensatz konstant bleibt oder sich verändert.

18. Verwendung von einem oder mehreren der vorherigen Ansprüche, wobei mindestens ein Eingabeelement einer Aktion eines Datenverarbeitungssystems zugeordnet wird oder diese auslöst.
